# EUROPEAN PATENT SPECIFICATION

(11) **EP 0 585 871 B1**
(45) Date of publication and mention of the grant of the patent: **06.11.1996**
(21) Application number: 93113894.5
(22) Date of filing: 31.08.1993
(51) Int. Cl.: B23C 5/22

(54) **A cutting insert for a milling cutter**
Schneideinsatz für einen Fräser
Plaquette de coupe pour une fraise

(30) Priority: 03.09.1992 US 940083
(43) Date of publication of application: 09.03.1994
(73) Proprietor: ISCAR LTD., Migdal, Tefen 24959 (IL)
(72) Inventor: Satran, Amir, Kfar Havradim 24960 (IL); Smilovici, Carol, Acre 24404 (IL)
(74) Representative: VOSSIUS & PARTNER

(56) References cited:
- EP-A- 0 480 576

## Description

This invention relates to exchangeable hard metal cutting inserts according to the precharacterising part of claim 1 for use with a rotary milling cutter comprising a holder in which are formed one or more peripheral recesses in which are respectively and releasably mounted a corresponding number of such inserts, the or each recess furthermore providing for a swarf space in front of each insert.

It is known that during milling cutting operations the length of the cutting edge is directly related to the vibrations induced in the milling cutter and the workpiece and the energy requirements in carrying out the cutting operation. These vibrations give rise to so-called "chatter". In other words, "chatter" tends to increase with increasing length of the cutting edge.

The vibrations and consequent "chatter" arise out of the forces exerted on the cutting insert and especially on the cutting rake surface thereof by the chip which is formed and the greater the width of the chip, the greater will be the exerted forces. With a view to decreasing these vibrations and "chatter", it is known to employ milling cutters having cutting inserts with relatively short cutting edges, the inserts being so orientated with respect to the tool holder and with respect to each other that the cutting paths of the cutting edges of successive cutting inserts overlap. In this way each relatively short cutting edge gives rise to a chip of relatively narrow width, the overlap between the cutting edges of successive cutting inserts ensuring that relatively smooth milling is attained.

In practice, however, this proposal is not found to be effective, requiring as it does the careful preliminary orientation of correctly designed cutting inserts on and with respect to the tool holder.

EP-A-0 480 576 representing the closest prior art discloses a cutting insert for use with a milling cutter, which insert is, by itself, capable of achieving the desired objective of reduced "chatter" in the use of the milling cutter tool.

EP-A-0 480 576 discloses a cutting insert for use with a rotary milling cutter tool and having a cutting edge defined between a cutting rake surface and a relief flank and having a base edge defined between said relief flank and a base surface. The cutting edge comprises a plurality of successive component cutting edges and intermediate edges respectively located between successive component cutting edges; each component cutting edge having respective leading and trailing extremities. The trailing extremity of one component cutting edge merges with the leading extremity of a succeeding component cutting edge via an intermediate edge, the intermediate edge being directed from said trailing extremity of the one component cutting edge towards the base edge. Each normal to an axis of rotation of the cutter tool which passes through a trailing extremity of one component cutting edge intersects the successive component cutting edge so that during a milling operation, successive component cutting edges overlap.

With such a cutting insert, and in view of the fact that the component cutting edges are very short, the resultant forces exerted on the cutting insert by the chips formed by these short cutting edges are relatively low and, in consequence, the degree of "chatter" encountered is minimal. Thus, in view of the relative disposition of the component cutting edges with the degree of overlapping of adjacent successive component cutting edges, it is ensured that effectively separate chips are formed of relatively low width.

It has been found that with such a cutting insert the particular distribution of the component cutting edges, i.e. their relative lengths and axial rake angles when the insert is mounted on the tool, has a direct bearing on the strength of the insert. This is particularly so where, as is often the case, the insert is formed with a centrally disposed clamping bore which of necessity introduces a weakened zone into the insert.

It is an object of the present invention to provide a new and improved cutting insert wherein the mechanical strength of the insert is reinforced.

This object is solved with the features of claim 1.

By virtue of the particular choice of the relative lengths and axial rake angles of the three successive component cutting edges of the insert in accordance with the invention, it is ensured that the mechanical strength of the insert in the region of its locating bore is reinforced.

Preferably, the cutting rake, relief flank and land surfaces associated with the respective component cutting edges are so directed that at corresponding locations along the respective component edges, the insert rake and relief angles, as well as the land surface angles as defined with respect to the cutter tool, are substantially equal.

One embodiment of a hard metal cutting insert in accordance with the invention, for use with a rotary milling cutter, will now be described by way of example and with reference to the accompanying drawings, in which:
**Fig. 1** is a perspective view of a cutting insert in accordance with the invention; and
**Fig. 2** is a side elevation of the insert shown in Fig. 1.

As seen in the drawings, an insert 1 of substantially rectangular parallelepipedal shape is formed, with upper rake surfaces 2 and a planar base surface 3 and is provided with a central clamping bore 1a of diameter **d**. The insert 1 is provided with relief flank surfaces 4 largely as described and illustrated with respect to the prior patent specification. In the case of the present insert, however, there are defined, between an opposite pair of major relief flanks and their adjacent cutting rake surfaces, a pair of cutting edges 5, each of which comprises three successive component cutting edges 5a, 5b and 5c respectively associated with component cutting rake surfaces.

As described in EP-A-0 480 576, the leading component cutting edge 5a merges at its terminal extremity with the succeeding component cutting edge 5b via an intermediate cutting edge 6 which slopes downwardly towards the base 3 of the insert 1. Similarly, the component cutting edge 5b merges with the succeeding cutting edge 5c via an intermediate edge 7, which also slopes downwardly towards the base 3 of the insert 1.

The insert just described is mounted as shown in Fig. 5 of the drawings of the prior specification in a rotary milling cutter having a cylindrical holder the insert being mounted so that its base presents a positive axial rake angle α with respect to an axis of rotation of the cutter tool.

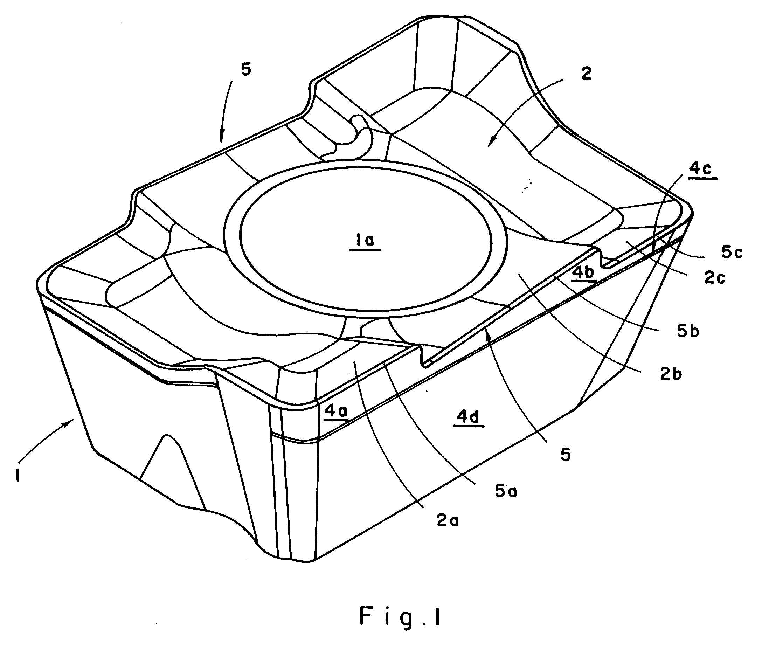

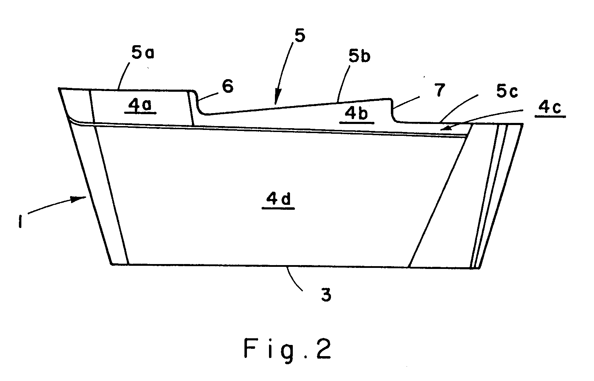

With the insert shown in Figs. 1 and 2 the component cutting edges 5a and 5b effectively overlap during a milling operation, as do the cutting edges 5b and 5c. This, of course, is similar to the insert as was described with reference to Fig. 5 of the drawings of the prior specification.

Each relief flank surface 4 comprises three upper component relief flank surfaces 4a, 4b and 4c which respectively define between them and adjacent component rake flank surfaces 2a, 2b and 2c, component cutting edges 5a, 5b and 5c. Each relief flank surface furthermore has a planar lower component relief flank surface 4d which extends along the entire length of the cutting insert.

Furthermore, and as described in the prior specification, in order to achieve optimal milling conditions, the component relief flank surfaces 4a, 4b and 4c and the cutting rake surfaces 2a, 2b and 2c are so disposed with respect to each other that, at corresponding locations along the component cutting edges, the relief flank and cutting rake angles are equal. Thus, for example, at the mid points of each component cutting edge, these angular conditions are fulfilled. Thus, the component relief flank surfaces are angularly disposed with respect to each other and with respect to the planar lower component relief flank surface 4d.

Alternatively, and again as described in the prior specification, each component cutting edge and relief flank surfaces 4a, 4b, 4c and 2a, 2b, 2c can be so curved as to ensure that along the entire length of a particular component cutting edge the relief flank and cutting rake angles remain substantially invariant. The particular modes by which these curvatures are ensured are described in U.S. Patent Nos. 5,052,863; 5,071,292 and 5,078,550.

The leading and trailing component cutting edges 5a and 5c, being substantially parallel to the base 3 of the insert 1 will present, when mounted in the tool, a relatively high positive axial rake angle and this, as is well known, is advantageous for those regions where the insert enters and leaves the workpiece. On the other hand, the intermediate component cutting edge 5b will present, when mounted on the tool, a significantly lesser (even negative) axial rake angle.

As can be seen, the intermediate component cutting edge 5b is of significantly greater length than each of the adjacent component cutting edges 5a and 5c (preferably the length of the component cutting edge 5b is equal to the sum of the lengths of the component cutting edges 5a and 5c). Furthermore, the intermediate component cutting edge 5b is substantially coextensive with the bore 1a and its length is therefore preferably at least equal to **d**. It therefore follows that the central region of the insert, which includes the bore 1a and is therefore potentially the weakest region of the insert 1, is protected against undue fracturing stresses by having its associated cutting edges 5b of reduced axial rake angle positivity or even of negative axial rake angle.

It will be appreciated that the leading and trailing component cutting edges 5a and 5c do not necessarily have to be parallel to each other or to the base of the insert. All that is required is that the intermediate cutting edge 5b be of a significantly lesser degree of axial rake angle positivity than that of the leading and trailing component cutting edges 5a and 5c. Similarly, the length of the intermediate cutting edge 5b need not necessarily be equal to the combined lengths of the component cutting edges 5a and 5c. All that is required is that the length of the component cutting edge 5b (which is substantially coextensive with the bore 1a) is substantially greater than the lengths of each of the component cutting edges 5a and 5c.

## Claims

1. A cutting insert (1) of substantially parallelepipedal shape for use with a rotary milling cutter tool, the cutting insert being rotated about an axis of rotation during a milling operation, the cutting insert (1) having an upper rake surface (2), a base surface (3), a pair of substantially parallel major cutting edges (5) and a pair of substantially parallel minor cutting edges directed transversely with respect to the major cutting edges, each major cutting edge (5) being defined between an adjacent rake surface and a relief flank, each relief flank defining with said base surface (3) a base edge, each major cutting edge (5) including first, second and third successive component cutting edges (5a, 5b, 5c), each component cutting edge having respective leading and trailing extremities, the trailing extremity of the first and second component cutting edge (5a, 5b) merging with the leading extremity of a succeeding second and third component cutting edge (5b, 5c) via an intermediate edge (6, 7), said intermediate edge (6, 7) being directed from said trailing extremity of said one component cutting edge (5a, 5b) towards said base edge (3), each normal to said axis of rotation of the cutter tool which passes through a trailing extremity of one component edge (5a, 5b) intersecting the successive component cutting edge (5b, 5c) so that, during a milling operation, successive component cutting edges (5a, 5b, 5c) being in overlapping relationship, said second component cutting edge (5b) defining with respect to said axis of rotation an axial rake angle which is substantially less positive than the axial rake angle which is defined by said first component cutting edge (5a) with respect to said axis of rotation;
characterized in that
the cutting insert comprises a centrally disposed clamping bore (1a), each second component cutting edge (5b) being substantially coextensive with said bore (1a) and being of substantially greater length than the length of each of said first and third component cutting edges (5a, 5c) and defining with respect to said axis of rotation, an axial rake angle which is substantially less positive than the axial rake angle defined by said third component cutting edge (5c) with respect to said axis of rotation.

2. A cutting insert according to Claim 1, characterized in that the component cutting edges (5a, 5b, 5c) are respectively associated with component relief flanks (4a, 4b, 4c), which are so directed towards each other that the insert side relief angles at corresponding locations on successive component relief flanks (4a, 4b, 4c) and as defined with respect to the milling cutter tool, are substantially equal.

3. A cutting insert according to Claim 2,characterized in that said relief flank surface (4) comprises an upper portion (4a, 4b, 4c) which comprises said component relief flank surfaces (4a, 4b, 4c) and a substantially planar lower portion (4d).

4. A cutting insert according to any one of Claims 1, 2 or 3, characterized in that the component cutting edges (5a, 5b, 5c) are respectively associated with component cutting rake surfaces (2a, 2b, 2c) which are so directed towards each other that insert cutting rake angles at corresponding locations on successive component cutting rake surfaces, and as defined with respect to the milling cutter tool, are substantially equal.

5. A cutting insert according to Claim 4, characterized in that each component relief flank (4a, 4b, 4c) and cutting rake surface (2a, 2b, 2c) are continuously curved so that the insert, rake and relief angles as defined with respect to the cutter tool remain substantially invariant along the length of the component cutting edges (5a, 5b, 5c).

6. A cutting insert according to any one of claims 1-5, characterized in that the length of said second component cutting edge (5b) is equal to the sum of the lengths of said component cutting edges (5a, 5c).

7. A cutting insert according to any one of claims 1-6, characterized in that the length of said second component cutting edge (5b) is at least equal to the diameter of said bore (1a).

8. A cutting insert according to any one of claims 1-7, characterized in that said second component cutting edge (5b) has a negative axial rake angle.

## Patentansprüche

1. Schneideinsatz (1) mit im wesentlichen Parallelepipedform zur Verwendung mit einem Rundlauf-Fräserwerkzeug, wobei der Schneideinsatz um eine Drehachse während eines Fräsvorgangs gedreht wird, der Schneideinsatz (1) eine obere Spanfläche (2), eine Basisfläche (3), ein Paar im wesentlichen parallele Hauptschneidkanten (5) und ein Paar im wesentlichen parallele Nebenschneidkanten hat, die quer zu den Hauptschneidkanten ausgerichtet sind, jede Hauptschneidkante (5) zwischen einer angrenzenden Spanfläche und einer Freiflanke gebildet ist, jede Freiflanke mit der Basisfläche (3) eine Basiskante bildet, jede Hauptschneidkante (5) eine erste, zweite und dritte aufeinanderfolgende Teilschneidkante (5a, 5b, 5c) aufweist, jede Teilschneidkante ein jeweiliges vorderes und hinteres Ende hat, sich das hintere Ende der ersten und zweiten Teilschneidkante (5a, 5b) mit dem vorderen Ende einer nachfolgenden zweiten und dritten Teilschneidkante (5b, 5c) über eine Zwischenkante (6, 7) vereinigt, die Zwischenkante (6, 7) von dem hinteren Ende der einen Teilschneidkante (5a, 5b) zu der Basiskante (3) ausgerichtet ist, jede Normale auf die Drehachse des Fräserwerkzeugs, die durch ein hinteres Ende einer Teilkante (5a, 5b) verläuft, die nachfolgende Teilschneidkante (5b, 5c) so schneidet, daß während eines Fräsvorgangs aufeinanderfolgende Teilschneidkanten (5a, 5b, 5c) in einer überlappenden Beziehung stehen, und die zweite Teilschneidkante (5b) zu der Drehachse einen axialen Spanwinkel bildet, der im wesentlichen weniger positiv als der axiale Spanwinkel ist, der durch die erste Teilschneidkante (5a) zu der Drehachse gebildet ist;
dadurch gekennzeichnet, daß
der Schneideinsatz eine mittig angeordnete Aufspannbohrung (1a) aufweist, wobei jede zweite Teilschneidkante (5b) im wesentlichen mit der Bohrung (1a) gleich weit verläuft und im wesentlichen eine größere Länge als die Länge der jeweiligen ersten und dritten Teilschneidkante (5a, 5c) hat und zu der Drehachse einen axialen Spanwinkel bildet, der im wesentlichen weniger positiv als der axiale Spanwinkel ist, der durch die dritte Teilschneidkante (5c) zu der Drehachse gebildet ist.

2. Schneideinsatz nach Anspruch 1, dadurch gekennzeichnet, daß die Teilschneidkanten (5a, 5b, 5c) jeweils zu Teilfreiflanken (4a, 4b, 4c) gehören, die so zueinander ausgerichtet sind, daß die Einsatzseitenfreiwinkel an entsprechenden Stellen an aufeinanderfolgenden Teilfreiflanken (4a, 4b, 4c), gebildet zu dem Fräserverkzeug, im wesentlichen gleich sind.

3. Schneideinsatz nach Anspruch 2, dadurch gekennzeichnet, daß die Freiflankenfläche (4) einen oberen Abschnitt (4a, 4b, 4c), der die Teilfreiflankenflächen (4a, 4b, 4c) aufweist, und einen im wesentlichen ebenen unteren Abschnitt (4d) aufweist.

4. Schneideinsatz nach einem der Ansprüche 1, 2 oder 3, dadurch gekennzeichnet, daß die Teilschneidkanten (5a, 5b, 5c) jeweils zu Teilschneidspanflächen (2a, 2b, 2c) gehören, die so zueinander ausgerichtet sind, daß Einsatzschneidspanwinkel an entsprechenden Stellen an aufeinanderfolgenden Teilschneidspanflächen, gebildet zu dem Fräserverkzeug, im wesentlichen gleich sind.

5. Schneideinsatz nach Anspruch 4, dadurch gekennzeichnet, daß jede Teilfreiflanken- (4a, 4b, 4c) und -schneidspanfläche (2a, 2b, 2c) so kontinuierlich gekrümmt sind, daß der Einsatz-, Span- und -freiwinkel, gebildet zu dem Fräserverkzeug, über die Länge der Teilschneidkanten (5a, 5b, 5c) im wesentlichen unveränderlich bleiben.

6. Schneideinsatz nach einem der Ansprüche 1 bis 5, dadurch gekennzeichnet, daß die Länge der zweiten Teilschneidkante (5b) gleich der Summe der Längen der Teilschneidkanten (5a, 5c) ist.

7. Schneideinsatz nach einem der Ansprüche 1 bis 6, dadurch gekennzeichnet, daß die Länge der zweiten Teilschneidkante (5b) mindestens gleich dem Durchmesser der Bohrung (1a) ist.

8. Schneideinsatz nach einem der Ansprüche 1 bis 7, dadurch gekennzeichnet, daß die zweite Teilschneidkante (5b) einen negativen axialen Spanwinkel hat.

## Revendications

1. Plaquette de coupe (1) de forme sensiblement parallèlipipédique destinée à être utilisée avec un outil de fraisage rotatif, la plaquette de coupe étant mise en rotation autour d'un axe de rotation pendant une opération de fraisage, la plaquette de coupe (1) ayant une surface de coupe supérieure (2), une surface de base (3), une paire de bords de coupe principaux (5) sensiblement parallèles et une paire de bords de coupe secondaires sensiblement parallèles orientés transversalement par rapport aux bords de coupe principaux, chaque bord de coupe principal (5) étant formé entre une surface de coupe adjacente et une face de dépouille, chaque face de dépouille formant avec ladite surface de base (3) un bord de base, chaque bord de coupe principal (5) comprenant un premier, second et troisième bords de coupe consécutifs (5a, 5b, 5c), chaque bord de coupe élémentaire ayant respectivement des extrémités avant et arrière, l'extrémité arrière du premier et du second bord de coupe élémentaire (5a, 5b) se réunissant à l'extrémité avant d'un second et troisième bord de coupe élémentaire suivant (5b, 5c) via un bord intermédiaire (6, 7), ledit bord intermédiaire (6, 7) étant orienté depuis ladite extrémité arrière dudit bord de coupe élémentaire (5a, 5b) vers ledit bord de base (3), chaque normale audit axe de rotation de l'outil de fraisage qui passe par une extrémité arrière d'un bord de coupe élémentaire (5a, 5b) étant sécante au bord de coupe élémentaire suivant (5b, 5c) de façon à ce que, pendant une opération de fraisage, les bords de coupe élémentaires consécutifs (5a, 5b, 5c) se chevauchent, ledit second bord de coupe élémentaire (5b) formant par rapport audit axe de rotation un angle de coupe axial qui est de valeur sensiblement moins positive que l'angle de coupe axial formé par ledit premier bord de coupe élémentaire (5a) par rapport audit axe de rotation ;
caractérisée en ce que
la plaque de coupe comprend un trou de blocage disposé de manière centrale (1a), chaque second bord de coupe élémentaire (5b) s'étendant sensiblement de manière conjointe audit trou (1a) et étant de longueur sensiblement plus grande que la longueur de chacun desdits premier et troisième bords de coupe élémentaires (5a, 5c) et formant par rapport audit axe de rotation, un angle de coupe axiale qui est sensiblement moins positif que l'angle de coupe axiale formé par ledit troisième bord de coupe élémentaire (5c) par rapport audit axe de rotation.

2. Plaquette de coupe selon la revendication 1, caractérisée en ce que les bords de coupe élémentaires (5a, 5b, 5c) sont respectivement associés aux faces de dépouille élémentaires (4a, 4b, 4c), qui sont orientées les unes vers les autres de façon à ce que les angles de dépouille latéraux situés aux emplacements correspondants des faces de dépouille élémentaires successives (4a, 4b, 4c) et définis par rapport à l'outil de fraisage, soient sensiblement égaux.

3. Plaquette de coupe selon la revendication 2, caractérisée en ce que ladite surface de dépouille (4) comprend une partie supérieure (4a, 4b, 4c) qui comporte les dites surfaces de dépouille élémentaires (4a, 4b, 4c) et une partie inférieure sensiblement plane (4d).

4. Plaquette de coupe selon l'une quelconque des revendications 1, 2 ou 3, caractérisée en ce que les bords de coupe élémentaires (5a, 5b, 5c) sont respectivement associés aux surfaces de coupe élémentaires (2a, 2b, 2c) qui sont orientées l'une vers l'autre de façon à ce que les angles de coupe de la plaquette aux emplacements correspondants des surfaces de coupe élémentaires successives, et définies par rapport à l'outil de fraisage, soient sensiblement égaux.

5. Plaquette selon la revendication 4, caractérisée en ce que chaque face de dépouille élémentaire (4a, 4b, 4c) et chaque surface de coupe (2a, 2b, 2c) sont courbées de manière continue pour que les angles de plaquette, de coupe et de face de dépouille définis par rapport à l'outil de fraisage restent sensiblement constants le long des bords de coupe élémentaires (5a, 5b, 5c).

6. Plaquette de coupe selon l'une quelconque des revendications 1 à 5, caractérisée en ce que la longueur dudit second bord de coupe élémentaire (5b) est égale à la somme des longueurs desdits bords de coupe élémentaires (5a, 5c).

7. Plaquette de coupe selon l'une quelconque des revendications 1 à 6, caractérisée en ce que la longueur dudit second bord de coupe élémentaire (5b) est au moins égale au diamètre dudit trou (1a).

8. Plaquette de coupe selon l'une quelconque des revendications 1 à 7, caractérisée en ce que ledit second bord de coupe élémentaire (5b) a un angle de coupe axiale négatif.
